(19) Europäisches Patentamt
European Patent Office
Office européen des brevets

(11) **EP 1 501 194 B1**

(12) **EUROPEAN PATENT SPECIFICATION**

(45) Date of publication and mention
of the grant of the patent:
**14.03.2012 Bulletin 2012/11**

(21) Application number: **03719125.1**

(22) Date of filing: **17.04.2003**

(51) Int Cl.:
**G02F 1/167** *(2006.01)*

(86) International application number:
**PCT/JP2003/004924**

(87) International publication number:
**WO 2003/088495 (23.10.2003 Gazette 2003/43)**

(54) **Electrode structure for a dry particle display device**

Elektrodenstruktur für eine Anzeigevorrichtung basierend auf trockenen Teilchen

Structure d'électrode pour un système d'affichage à particules sèches

(84) Designated Contracting States:
**DE FR**

(30) Priority: 17.04.2002 JP 2002114586
17.04.2002 JP 2002114668
02.05.2002 JP 2002130411
02.05.2002 JP 2002130510
31.05.2002 JP 2002158781
29.10.2002 JP 2002313817
29.10.2002 JP 2002313955

(43) Date of publication of application:
**26.01.2005 Bulletin 2005/04**

(60) Divisional application:
**10075698.0 / 2 299 318**

(73) Proprietor: **Bridgestone Corporation**
**Tokyo 104-8340 (JP)**

(72) Inventors:
• **NIHEI, Norio**
**Kodaira-shi, Tokyo 187-0031 (JP)**
• **KITANO, Hajime**
**Kodaira-shi, Tokyo 187-0031 (JP)**
• **TAKAGI, Koji**
**Kawasaki-shi, Kanagawa 211-0051 (JP)**
• **YAKUSHIJI, Gaku**
**Higashiyamato-shi, Tokyo 207-0022 (JP)**
• **MURATA, Kazuya**
**Kodaira-shi, Tokyo 187-0031 (JP)**
• **SAKURAI, Ryou**
**Kodaira-shi, Tokyo 187-0031 (JP)**
• **IWABUCHI, Yoshinori**
**Kodaira-shi, Tokyo 187-0031 (JP)**
• **YAMAZAKI, Hirotaka**
**Kunitachi-shi, Tokyo 186-0005 (JP)**
• **MASUDA, Yoshitomo**
**Hamura-shi, Tokyo 205-0023 (JP)**
• **HATTORI, Reiji**
**Fukuoka-shi, Fukuoka 819-0002 (JP)**

(74) Representative: **Whalley, Kevin**
**Marks & Clerk LLP**
**90 Long Acre**
**London WC2E 9RA (GB)**

(56) References cited:
EP-A- 1 089 118      EP-A- 1 429 178
EP-A- 1 484 635      WO-A-00/03349
JP-A- 2004 004 483    JP-U- 2 119 625
JP-U- 2 119 625      US-A- 4 203 106
US-A1- 2002 024 620   US-A1- 2002 027 635
US-A1- 2002 027 635   US-A1- 2002 054 620
US-A1- 2002 089 495

• ZYGO CORPORATION: "MetroPro(TM) Surface
Texture Parameters" June 2005 (2005-06), ZYGO
CORPORATION , USA , XP002460415 Technical
manual explaining various roughness and
spacing parameters. * pages 5,10 *

**Description**

The present invention relates to a dry-type particle display device, which comprises an image display panel which can repeatedly display or delete images accompanied by flight and movement of particles utilizing Coulomb's force and so on.

As an image display device substitutable for liquid crystal display (LCD), image display devices with the use of technology such as an electrophoresis method, an electro-chromic method, a thermal method, dichroic-particles-rotary method are proposed.

As for these image display device, it is conceivable as inexpensive visual display device of the next generation from a merit having wide field of vision close to normal printed matter, having smaller consumption with LCD, spreading out to a display for portable device, and an electronic paper is expected. Recently, electrophoresis method is proposed that microencapsulate dispersion liquid made up with dispersion particles and coloration solution and dispose the liquid between faced substrates. Reference is made to EP-A-1089118 and JP-A-21196254.

However, in the electrophoresis method, there is a problem that a response speed is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252]. Reference is made to US 2002/027 635. The features of the preamble of claim 1 are known from this document. However, the structure becomes complicated because the charge transport layer and further a charge generation layer are to be arranged. In addition, it is difficult to constantly dissipate charges from the electro-conductive particles, and thus there is a drawback on the lack of stability.

As one method for overcoming the various problems mentioned above, an image display device comprising an image display panel is known, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image by means of Coulomb's force.

Tasks to be solved by the invention including a first embodiment and a second embodiment are as follows. That is, if the image is repeatedly displayed and deleted in the image display device, the particles are moved in parallel to the substrate due to agglutination power and gravity of the particle itself and a rough and dense portion of the particles is generated, so that a defect of the image display and a decrease of the contrast occur. Therefore, an idea is proposed such that a space between the substrates is divided finely by a partition wall so as to form a cell structure and a movement along lateral direction of the particles is inhibited. However, in this method utilizing the partition wall, there is a drawback such that an effective display area decreases and thus the contrast deteriorates. Moreover, there is a drawback such that a particle filling operation into the cell becomes complicated when manufacturing the image display device and further a manufacturing cost of the image display device is increased due to the partition wall production.

DISCLOSURE OF INVENTION

An object of the invention including the first embodiment and the second embodiment is to provide an image display device having a rapid response in a dry-type device, a simple and inexpensive construction and an excellent stability, which can inhibit an image deterioration due to a particle agglutination during repeated image display operations and can improve a durability. The present invention provides a dry-type particle display device which comprises an image display panel, in which two or more groups of particles having different colors and different charge characteristics are sealed between two substrates, at least one of said two substrates being transparent, and in which the particles, to which an electrostatic field produced by a pair of electrodes provided on respective substrates is applied, are made to move so as to display an image, characterized either in that micro-concave portions and/or micro-convex portions or in that micro-cutout holes are provided on a part of or over the whole of an electrode surface, so that a lateral electric field component is induced on switching.

According to a first emdodiment, micro-concave portions and/or micro-convex portions are provided. According to a second embodiment, micro-cutout holes are provided.

Normally, an electric field for flying the particles applied from a pair of electrodes provided respectively on the two substrates arranged in parallel with each other is an even electric field. On the other hand, in the image display device according to the invention, it is possible to introduce a very little uneven electric field partly by the micro-concave portions and/or the micro-convex portions arranged to a surface of the electrode. Since the very little uneven electric field generated by the micro-concave portions and/or the micro-convex portions includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination.

In the image display device of the first embodiment according to the invention, an influence rate for the particles applied from the uneven electric field obtained by the micro-concave portions and/or the micro-convex portions is determined in relation to an average particle size of the particles. Therefore, it is possible to obtain the uneven electric field having a value larger than a predetermined value by defining a relation between the average particle size and a dimension of the micro-concave portions and/or the micro-convex portions. From this viewpoint, it is preferred to construct the micro-concave portions and/or the micro-convex portions in such a manner that the following formulas are satisfied:

$$w_{av} / d_{av\_max} > 2;$$

and

$$h_{av} / d_{av\_max} > 2;$$

wherein $w_{av}$ is the average width defined as a distance from corner to corner across the shape of the projection of the micro-concave portions and/or the micro-convex portions on to the electrode surface , $h_{av}$ is the average absolute value of the depth of the micro-concave portions and/or of the height of the micro-convex portions ; and $d_{av\_max}$ is the largest average particle size among the two or more groups of particles.

If the above relations are not satisfied, it is not possible to obtain the uneven electric field having a value larger than the predetermined value. Therefore, it is not possible to sufficiently obtain the effects such that the image deterioration due to the particle agglutination during the repeated image display operations can be inhibited and the durability can be improved.

In the image display device of the first embodiment according to the invention, if the micro-concave portions and/or the micro-convex portions are to be arranged on a display electrode that requires an optical transparent property, it is difficult to increase an ITO transparent electrode used normally as a thin film of several tens nm order from the viewpoint of its process and its optical property. In an unclaimed arrangement a transparent insulation layer is arranged on the electrode and micro-concave portions and/or the micro-convex portions are arranged thereto so as to obtain the same effects. Moreover, it is possible to print an insulation resin in a dot pattern by utilizing a screen-printing method and so on and to use the dot pattern as the micro-convex portions. In this case, when an occupied area rate of the dot pattern is sufficiently small, use may be made of a resin other than a transparent one.

In the image display device of the first embodiment according to the invention, it is preferred to arrange a plurality of the micro-concave portions and/or the micro-convex portions with a space, because the very little uneven electric field can be applied to a large electrode surface i.e. a large pixel. Accordingly, it is preferred that an average distance $L_{av}$ between the micro-concave portions and/or the micro-convex portions is arranged to satisfy the formula:

$$L_{av} / d_{av\_max} < 50.$$

In this case, it is possible to obtain the effect of an uneven electric field generation due to the micro-concave portions and/or the micro-convex portions continuously in a wide range.

Moreover, under some circumstances, a slight contrast decrease is sometimes detected at a region to which the micro-concave portions and/or the micro-convex portions are arranged. Therefore, in order to maintain a contrast of the overall display portion, it is preferred that a gross area of projection shapes of the micro-concave portions and/or the micro-convex portions on the electrode surface is not more than 50 % with respect to an area of the electrode. In addition, in order to sufficiently obtain the effect of the micro-concave portions and/or the micro-convex portions, it is preferred that the total area of the micro-concave portions and the micro-convex portions is not less than 0.1 % with respect to the electrode area.

As the particles used in the image display device of the first embodiment of the invention, it is preferred to use the particles such that an average particle diameter of the particles is 0.1 to 50 $\mu$m. Moreover, in an unclaimed arrangement, the use the particles are such that a surface charge density of the particles measured by a carrier and in accordance with a blow-off method is not less than 5 $\mu$C/m$^2$ and not greater than 150 $\mu$C/m$^2$ in an absolute value. Further, it is preferred that the particles are particles such that the maximum surface potential, in the case that the surface of particles is charged by applying a voltage of 8 KV to a Corona discharge device deployed at a distance of 1 mm from the surface, is 300 V or greater at 0.3 second after the Corona discharge. Furthermore, it is preferred that a color of the particles is a white or a black.

According to the second embodiment of the invention, a dry particle display device which comprises an image display panel, in which two or more groups of particles having different colours and different charge characteristics are sealed between two substrates, at least one of two substrates being transparent, and, in which the particles, to which an electrostatic field produced by a pair of electrodes provided on respective substrates is applied, are made to move so as to display an image, is characterized in that micro-cutout holes are provided to a part of or an overall of a surface of the electrode.

Normally, an electric field for flying the particles applied from a pair of electrodes provided respectively on the two substrates arranged in parallel with each other is an even electric field. On the other hand, in the image display device according to the invention, it is possible to introduce a very little uneven electric field partly by the micro-cutout holes arranged to a surface of the electrode. Since the very little uneven electric field generated by the micro-cutout holes includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination.

In the image display device of the second embodiment according to the invention, an influence rate for the particles applied from the uneven electric field obtained by the micro-cutout holes is determined in relation to an average particle size of the particles. Therefore, it is possible to obtain the uneven electric field having a value larger than a predetermined value by defining a relation between the average particle size of the particles and a dimension of the micro-cutout holes. From this viewpoint, it is preferred to construct the micro-cutout holes in such a manner that the following formula is satisfied:

$$w_{max} / d_{av\_max} > 10;$$

where $w_{max}$ is the maximum width defined as the maximum distance from corner to corner across the shape of the micro-cutout holes; and $d_{av\_max}$ is the largest average particle size among the two or more groups of particles.

If the above relation is not satisfied, it is not possible to obtain the uneven electric field having a value larger than the predetermined value. Therefore, it is not possible to sufficiently obtain the effects such that the image deterioration due to the particle agglutination during the repeated image display operations can be inhibited and the durability can be improved.

In the image display device of the second embodiment of the invention, it is preferred to arrange a plurality of the micro-cutout holes with a space, because the very little uneven electric field can be applied to a large electrode surface i.e. a large pixel. Accordingly, it is preferred that a minimum distance $L_{min}$ between the holes is arranged to satisfy the following formula:

$$L_{min} / d_{av\_max} < 50.$$

In this case, it is possible to obtain the effect of an uneven electric field generation due to the micro-cutout holes continuously in a wide range.

Moreover, under some circumstances, a slight contrast decrease is sometimes detected at a region to which the micro-cutout holes are arranged. Therefore, in order to maintain a contrast of the overall display portion, it is preferred that the total area of the micro-cutout holes on the electrode surface is not more than 50% with respect to an area of the electrode. In addition, in order to sufficiently obtain the effect of the micro-cutout holes, it is preferred that the total area of the micro-cutout holes is not less than 0.1% with respect to the electrode area.

As the particles used in the image display device of the second embodiment of the invention, it is preferred to use the particles such that an average particle diameter of the particles is 0.1 to 50 $\mu$m. Moreover, in an unclaimed arrangement, the particles are such that a surface charge density of the particles measured by a carrier and in accordance with a blow-off method is not less than 5 $\mu$C/m$^2$ and not greater than 150 $\mu$C/m$^2$ in an absolute value. Further, it is preferred that the particles are particles in which the maximum surface potential, in the case that the surface of particles is charged by applying a voltage of 8 KV to a Corona discharge device deployed at a distance of 1 mm from the surface, is 300 V or greater at 0.3 second after the Corona discharge. Furthermore, it is preferred that a color of the particles is a white or a black.

BRIEF DESCRIPTION OF DRAWINGS

Figs. 1a - 1c are schematic views respectively showing one embodiment of a display element of a image display panel used in an image display device according to a first aspect of the invention and its display driving method.

Figs. 2a - 2h are schematic views respectively explaining one embodiment of micro-concave portions and/or micro-convex portions provided to a surface of an electrode of a first embodiment according to invention.

Fig. 3 is a schematic view illustrating one embodiment in which the present invention is applied to a segment display device of the first embodiment according to the invention.

Fig. 4 is a schematic view depicting one embodiment of an opposed substrate of the segment display device of the first embodiment according to the invention.

Fig. 5 is a schematic view showing one embodiment of a transparent electrode of the segment display device of the first embodiment according to the invention.

Fig. 6 is a schematic view illustrating one embodiment of a screen pattern (resist pattern) of the segment display device of the first embodiment according to the invention.

Figs. 7a - 7g are schematic views respectively explaining one embodiment of micro-cutout holes formed by cutting out the surface of the electrode of a second embodiment according to the invention.

Fig. 8 is a schematic view depicting one embodiment in which the present invention is applied to a segment display device of the second embodiment according to the invention.

Fig. 9 is a schematic view showing another embodiment in which the present invention is applied to a segment display device of the second embodiment according to the invention.

Fig. 10 is a schematic view illustrating a measuring method of a particle surface potential.

BEST MODE FOR CARRYING OUT THE INVENTION

At first, an image display device according to the invention will be explained.

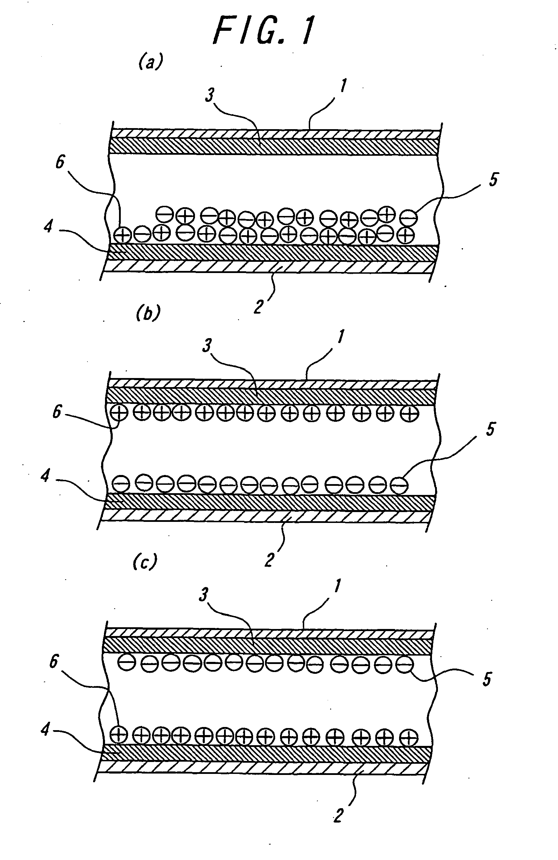

Figs. 1a to 1c are schematic views respectively showing first and second embodiments of the image display element of the image display panel used for the image display device according to the invention and its display driving method. In the embodiments shown in Figs. 1a to 1c, numeral 1 is a transparent substrate, numeral 2 is an opposed substrate, numeral 3 is a display electrode (transparent electrode), numeral 4 is an opposed electrode, numeral 5 is a negatively chargeable particle, numeral 6 is a positively chargeable particle.

Fig. 1a shows a state such that the negatively chargeable particles 5 and the positively chargeable particles 6 are arranged between opposed substrates (transparent substrate 1 and opposed substrate 2). Under such a state, when a voltage is applied in such a manner that a side of the display electrode 3 becomes low potential and a side of the opposed electrode 4 becomes high potential, as shown in Fig. 1b, the positively chargeable particles 6 fly and move to the side of the display electrode 3 and the negatively chargeable particles 5 fly and move to the side of the opposed electrode 4 by means of Coulomb's force. In this case, a display face viewed from a side of the transparent substrate 1 looks like a color of the positively chargeable particles 6. Next, when a voltage is applied in such a manner that the side of the display electrode 3 becomes high potential and the side of the opposed electrode 4 becomes low potential by reversing potentials, as shown in Fig. 1c, the negatively chargeable particles 5 fly and move to the side of the display electrode 3 and the positively chargeable particles 6 fly and move to the side of the opposed electrode 4 by means of Coulomb's force. In this case, the display face viewed from the side of the transparent substrate 1 looks like a color of the negatively chargeable particles 5.

The display states shown in Figs. 1b and 1c are repeatedly changeable only by reversing the potentials of a power source, and thus it is possible to change colors on the display face reversibly by reversing the potentials of the power source as mentioned above. The colors of the particles can be arbitrarily selected. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method, since the particles are once adhered to the electrode by means of an imaging force, a display image can be maintained for a long time after a voltage apply is stopped, thereby showing an excellent memory property.

In the present invention, since the chargeable particles fly and move in the gas, the response speed of the image display is extremely fast and the response speed of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

In the image display device explained in Figs. 1a - 1c according to the first embodiment of the invention, micro-concave portions, micro-convex portions, or both of the micro-concave portions and the micro-convex portions are provided to a part of or an overall of a surface of the electrode (here, display electrode 3 and opposed electrode 4). In this case, a shape of the micro-concave portions and/or the micro-convex portions is important. From this viewpoint, it is preferred that the micro-concave portions and/or the micro-convex portions are constructed in such a manner that the following formulas are satisfied: average width/maximum average particle size > 2; and average height/maximum average particle size > 2; where a length across corner of a projection shape of the micro-concave portions and/or the micro-convex portions with respect to an electrode surface is assumed to be the average width, an average absolute value of a depth and/or a height of the micro-concave portions and the micro-convex portions is assumed to be the average height (depth), and a largest average particle size among the two or more groups of particles is assumed to be the maximum average particle size.

In the image display device according to the first embodiment of the invention, a shape of the micro-concave portions and/or the micro-convex portions provided to the electrode surface may be circle shape, ellipse shape, square shape, rectangle shape, polygon shape, line shape, curve shape, indeterminate shape or a combination thereof. Moreover, even in the case of a segment display in which an area of one pixel becomes particularly large, it is possible to obtain the same effects by arranging the micro-concave portions and/or the micro-convex portions repeatedly. In this case, as a repeated arrangement, use may be made of lattice arrangement, hound's-tooth arrangement, pitch variable arrangement, random arrangement and so on.

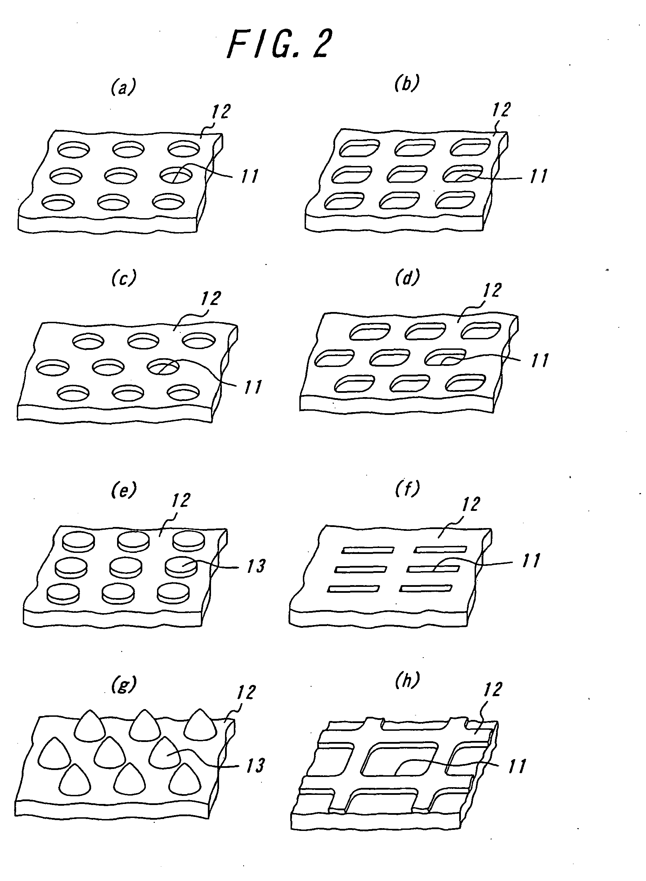

Figs. 2a - 2h are schematic views respectively explaining one embodiment of the micro-concave portions and/or the micro-convex portions provided to the electrode surface. In Fig. 2a, micro-concave portions 11 having a circle shape are provided to a surface of an electrode 12 in a lattice arrangement. In Fig. 2b, the micro-concave portions 11 having a racetrack shape are provided to the surface of the electrode 12 in a lattice arrangement. In Fig. 2c, the micro-concave portions 11 having a circle shape are provided to the surface of the electrode 12 in a hound's-tooth, arrangement. In Fig. 2d, the micro-concave portions 11 having a racetrack shape are provided to the surface of the electrode 12 in a hound's-tooth arrangement. In Fig. 2e, micro-convex portions 13 having a circle shape are provided to the surface of the electrode 12 in a lattice arrangement. In Fig. 2f, the micro-concave portions 11 having a line slit shape are provided to the surface of the electrode 12 in a parallel arrangement. In Fig. 2g, the micro-convex portions 13 having a cone shape are provided to the surface of the electrode 12 in a lattice arrangement. In Fig. 2h, the micro-concave portions 11 having a square shape are provided to the surface of the electrode 12 like a waffle.

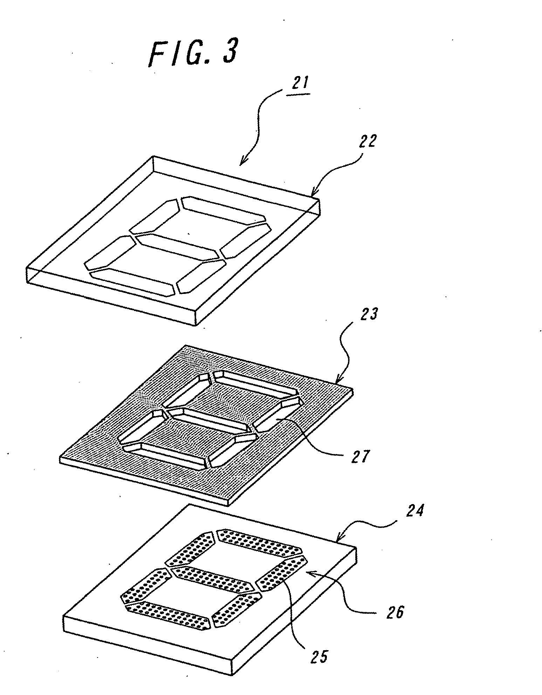

Fig. 3 is a schematic view showing one embodiment in which the first embodiment of the invention is applied to a segment display device. In the embodiment shown in Fig. 3, a segment display device 21 is constructed by stacking a transparent substrate 22, a spacer 23 and an opposed substrate 24. To a surface of the transparent substrate 22 at a side of the spacer 23, a transparent electrode (not shown) having a shape corresponding to respective segments of a display pattern is arranged. As the spacer 23, use is made of a black spacer having openings 27 corresponding to respective segments of the display pattern. Seven segment electrodes 26, to which a plurality of micro-concave portions 25 having a circle shape are provided, are formed to a surface of the opposed substrate 24 at the spacer 23 side respectively. To the transparent electrode and the segment electrode 26, wiring lines not shown are arranged so as to connect them to a drive circuit not shown. Two or more kinds of the particles having different colors and different charge properties i.e. the positively chargeable particles and the negatively chargeable particles as shown in the above embodiment are filled in respective seven openings 27 of the spacer 23. It should be noted that a thickness of the spacer 23 is controlled to make a distance between the electrodes to a predetermined distance. Operation of the segment display shown in Fig. 3 is the same as that of the image display device mentioned above.

In the segment display device 21 mentioned above, the segment electrode 26 having the micro-concave portions 25 may be manufactured in such a manner that one surface of aluminum plate having a square shape for example 100 mm x 100 mm and a thickness of 1 mm is etched to form a plurality of micro-concave portions 25 and the etched aluminum plate is cut into respective segment shapes.

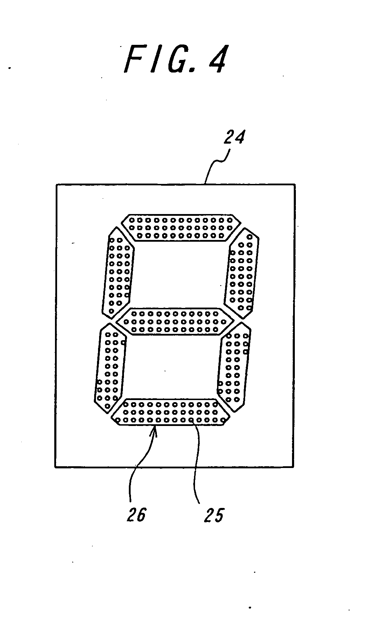

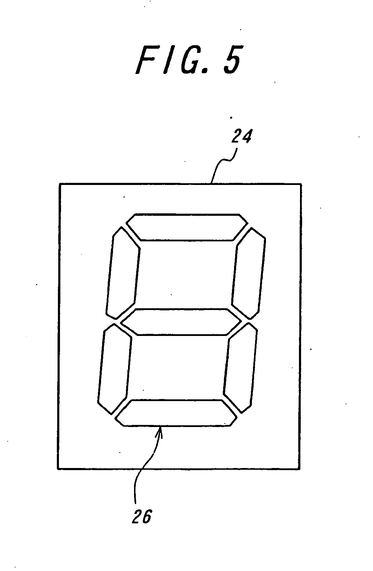

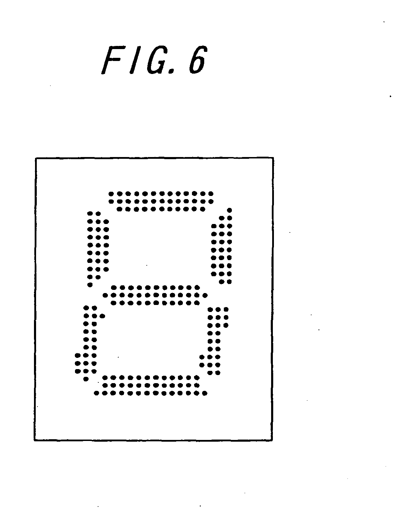

As another example, the opposed substrate 24 (Fig. 4) on which the segment electrode 26 having the micro-convex portions are arranged may be manufactured as follows. At first, as shown in Fig. 5, the segment electrode 26 corresponding to the display pattern is formed on a glass substrate by means of ITO transparent electrodes. Then, as shown in Fig. 6, a screen 28 having openings corresponding to the portions, to which the micro-convex portions are formed, is prepared. This screen is overlapped on the glass substrate on which the segment electrode 26 is formed. A paste for forming PDP ribs is adhered to a surface of the segment electrode 26 through the openings. In this manner, the predetermined opposed substrate 24 is manufactured. In this case, a height of the micro-convex portions can be adjusted to a predetermined value by controlling a viscosity of the paste and a dimension of the openings.

As still another example, the opposed substrate 24 (Fig. 4) on which the segment electrode 26 having the micro-concave portions are arranged may be manufactured as follows. At first, as shown in Fig. 5, the segment electrode 26 corresponding to the display pattern is formed on the glass substrate by means of the ITO transparent electrode. Then, a resist film having a thickness of 50 $\mu$m is adhered to an overall surface of the glass substrate. The resist film is exposed by UV through the photo-mask 28 (refer to Fig. 6) corresponding to the display pattern and is etched so as to form the micro-concave portions to the segment electrode 26. In this manner, a depth of the micro-concave portions can be adjusted to a predetermined value by controlling a time of the etching operation.

In the image display device explained in Figs. 1a - 1c, the second embodiment of the invention is characterized in that micro-cutout holes (explained below) are provided to a part of or an overall of a surface of the electrode (here, display electrode 3 and opposed electrode 4). In this case, a shape of the micro-cutout holes is important. From this viewpoint, it is preferred that he following formula is satisfied: maximum width / maximum average particle size > 10; where a largest length across corner of a shape of the micro-cutout holes is assumed to be the maximum width and a largest average particle size among the two or more groups of particles is assumed to be the maximum average particle size.

In this embodiment, a shape of the micro-cutout holes provided to the electrode surface may be circle shape, ellipse shape, square shape, rectangle shape, polygon shape, line shape, curve shape, indeterminate shape or a combination thereof. Moreover, even in the case of a segment display in which an area of one pixel becomes particularly large, it is possible to obtain the same effects by arranging the micro-cutout holes repeatedly. In this case, as a repeated arrangement, use may be made of lattice arrangement, hound's-tooth arrangement, pitch variable arrangement, random arrangement and so on.

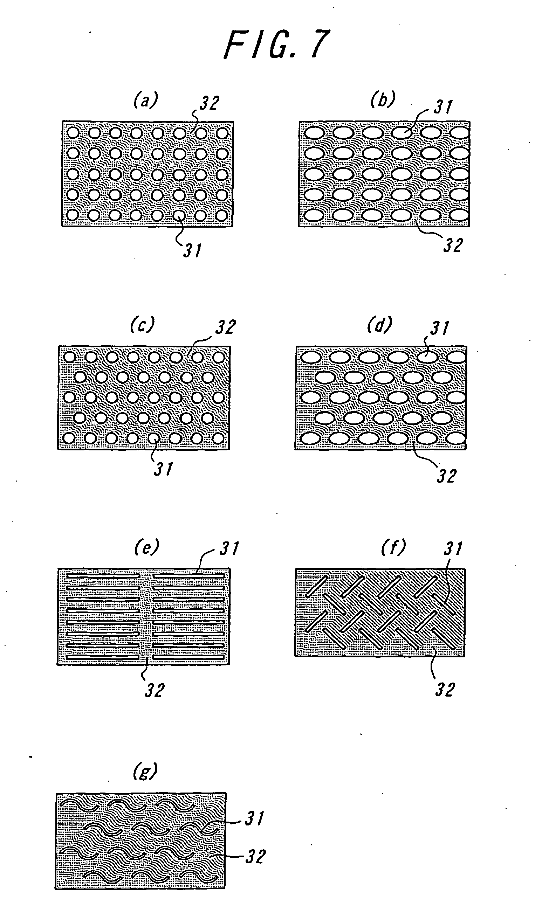

Figs. 7a - 7g are schematic views respectively explaining one embodiment pf the micro-cutout holes formed to the electrode surface by cutting. In Fig. 7a, micro-cutout holes 31 having a circle shape are provided to a surface of an electrode 32 in a lattice arrangement. In Fig. 7b, the micro-cutout holes 31 having an ellipse shape are provided to the surface of the electrode 32 in a lattice arrangement. In Fig. 7c, the micro-cutout holes 31 having a circle shape are provided to the surface of the electrode 32 in a hound's-tooth arrangement. In Fig. 7d, the micro-cutout holes 31 having an ellipse shape are provided to the surface of the electrode 32 in a hound's-tooth arrangement. In Fig. 7e, the micro-cutout holes 31 having a sine slit shape are provided to the surface of the electrode 32 in a parallel arrangement. In Fig. 7f, the micro-cutout holes 31 having a line slit shape are provided to the surface of the electrode 32 in two alternating directions different with each other by 90˚. In Fig. 7g, the micro-cutout holes 31 having a curve line shape are provided to the surface of the electrode 32 in a hound's-tooth arrangement.

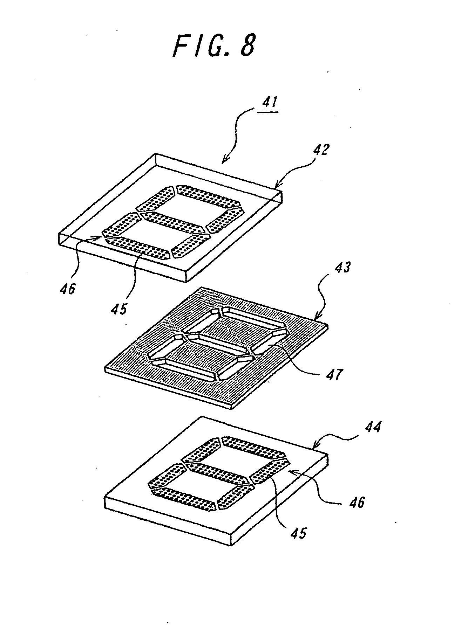

Fig. 8 is a schematic view showing one embodiment in which the second embodiment of the invention is applied to a segment display device. In the embodiment shown in Fig. 8, a segment display device 41 is constructed by stacking a transparent substrate 42, spacer 43 and an opposed substrate 44. Seven segment electrodes 46, to which a plurality of micro-cutout holes 45 having a dot shape are provided, are formed to a surface of the transparent substrate 42 at a side of the spacer 43, respectively. As the spacer 43, use is made of a blue spacer having openings 47 corresponding to respective segments of the display pattern. Seven segment electrodes 46, to which a plurality of the micro-cutout holes 45 are provided, are formed to a surface of the opposed substrate 44 at a side of the spacer 43 respectively, as is the same as the transparent substrate 42.

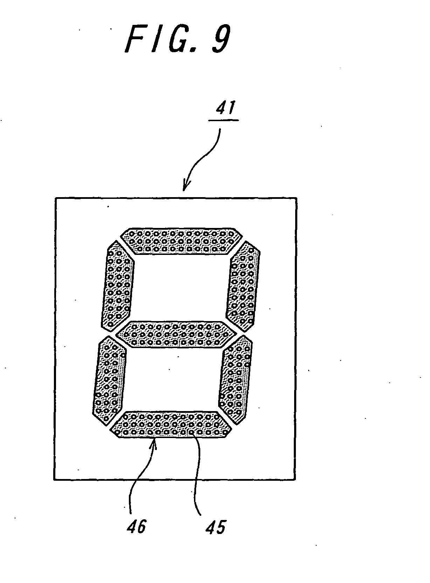

Then, two or more kinds of particles having different colors and different charge properties i.e. the positively chargeable particles and the negatively chargeable particles are filled in respective seven openings 47 of the spacer 43. Operation of the segment display device 41 shown in Fig. 8 is the same as that of the image display device mentioned above. In the embodiment shown in Fig. 8, a dimension of respective segments is for example a width of about 1 cm, a length of about 5 cm and a whole height of a letter "8" of about 10 cm. Moreover, a shape of the micro-cutout holes 45 is not apparently limited to the above shapes, and as shown in Fig. 9, the micro cutout holes 45 having a circle shape may be provided to respective segments in a lattice arrangement.

Hereinafter, a substrate of the image display device according to the first and second embodiments of the invention will be explained. With regard to the substrate, at least one substrate must be transparent substrate capable of recognizing the displaying color from outside of the display panel, and a material with large transmission factor of visible light and with excellent heat resistance is preferable. The presence of flexibility as the image display device is selected appropriately by the usage, for example, the flexible materials are selected for the usage as an electronic paper and so on, and materials having no flexibility are selected for the usage as display units for portable devices such as cellular phones, PDAs, and notebook personal computers.

Examples of the substrate material include polymer sheets such as polyethylene terephthalate, polymer sulfone, polyethylene, or polycarbonate, and inorganic sheets such as glass, quartz or so. The thickness of the substrate is preferably 2 to 5000 $\mu$m, more preferably 5 to 1000 $\mu$m. When the thickness is too thin, it becomes difficult to maintain strength and distance uniformity between the substrates, and when the thickness is too thick, vividness and contrast as a display capability degrade, and in particular, flexibility in the case of using for an electron paper deteriorates.

Then, the particles used in the image display device according to the invention will be explained. Although any of colored particles negatively or positively chargeable having capability of flying and moving by Coulomb's force are employable, spherical particles with light specific gravity are particularly preferable. The average particle diameter is preferable to be 0.1 to 50 $\mu$m, particularly to be 1 to 30 $\mu$m. When the particle diameter is less than this range, charge density of the particles will be so large that an imaging force to an electrode and a substrate becomes too strong; resulting in poor following ability at the inversion of its electric field, although the memory characteristic is favorable. On the contrary, when the particle diameter exceeds the range, the following ability is favorable, however, the memory characteristic will degrade.

Although the method for charging the particles negatively or positively is not particularly limited, a corona discharge method, an electrode injection-charge method, a friction charge method and so on are employable. It is preferable that the absolute value of the difference between the surface charge densities of the particles, which are measured by a blow-off method using carriers, is not less than 5 $\mu$C/m$^2$ and not larger than 150 $\mu$C/m$^2$. When the absolute value of the surface charge density is less than this range, response speed to the change of an electric field will be late, and the memory property degrades. When the absolute value of the surface charge density exceeds this range, image force for the electrode or the substrate will be so strong that the memory property will be favorable, but following ability will be poor in the case where the electric field is inverted.

Hereinafter, the method of measuring the charge amount of particles and the method of measuring the specific gravity of particles, both necessary for calculating the surface charge density will be explained.

<Blow-off measuring theory and method>

In the blow-off method, a mixture of the particles and the carriers are placed into a cylindrical container with nets at both ends, and high-pressure gas is blown from the one end to separate the particles and the carriers, and then only the particles are blown off from the mesh of the net. In this occasion, charge amount of reverse blown polarity remains on the carriers with the same charge amount of the particles carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.

As a blow-off powder charge amount measuring instrument, TB-200 produced by Toshiba Chemical Co., Ltd. was used. Two kinds of positively chargeable and negatively chargeable resin were employed as the carriers, and charge density per unit area (unit: $\mu$C/m$^2$) was measured in each case. Namely, F963-2535 available from Powder TEC Co., Ltd. was employed as a positive chargeable carrier (the carrier whose opponent is positively charged and itself tends to be negative) and F921-2535 available from Powder TEC Co., Ltd. was employed as negatively chargeable carrier (the carrier whose opponent is negatively charged and itself tends to be positive). The surface charge density of the particles was obtained from the measured charge amount, the average particle diameter and specific gravity of the particles measured separately.

<Particle specific gravity measuring method>

The specific gravity was measured with the use of a hydrometer produced by Shimadzu Seisakusho Ltd. (brand name: Multi volume Density Meter H1305).

Because it is necessary for the particles to hold the charged electric charge, insulating particles with the volume specific resistance of $1 \times 10^{10}$ $\Omega \cdot$ cm or greater are preferable, and in particular, insulating particles with the volume specific resistance of $1 \times 10^{12}$ $\Omega \cdot$ cm or greater are more preferable. Further, the particles with slow charge attenuation property evaluated by the measuring method below are more preferable.

Namely, applying the voltage of 8 kV to a Corona generator disposed with a distance of 1 mm to the surface to generate Corona discharge, charging the surface, and then, measuring the change of the surface potential, determine the suitability. In this occasion, it is preferable to select the material whose maximum surface potential will be 300 V or greater after 0.3 seconds, more preferable to select the material whose maximum surface potential will be 400 V or greater after 0.3 second as the material for composing the particles.

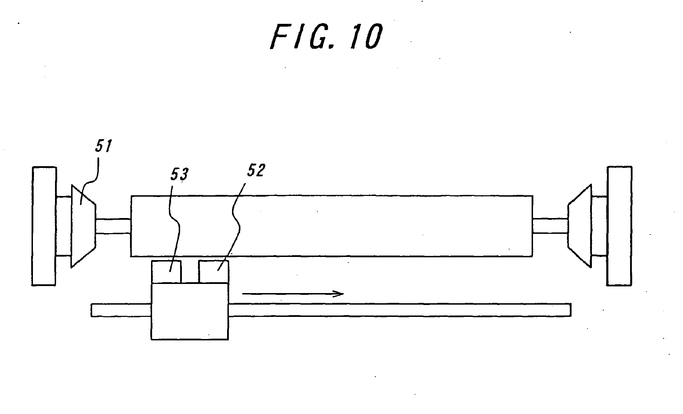

Additionally, the foregoing surface potential is measured by means of an instrument (CRT2000 produced by QEA Inc.) as shown in Fig. 10. In this instrument both end portions of a roll shaft being held with chuck 51, compact scorotron discharger 52 and surface potential meter 53 are spaced with predetermined interval to form a measurement unit. Facedly deploying the measurement unit with a distance of 1 mm from the surface of the particles, and by moving the measurement unit from one end portion of the roll shaft to the other end portion with an uniform speed, with the state that the roll shaft remains stopping and while giving surface charge, a method of measuring its surface potential is preferably adopted. Moreover, measurement environment should be settled at the temperature of 25 ± 3˚C and the humidity of 55 ± 5% RH.

If the particles satisfy electrostatic property and so on, the particles may be formed by any materials. For example, it is formed by resin, charge control agent, coloring agent, inorganic additive and so on, or, by coloring agent and so on only.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable. Two kinds or more of these may be mixed and used.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-minute particles of silica, ultra-minute particles of titanium oxide, ultra-minute particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon. Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, and tartrazinelake. Examples of orange pigments include red chrome yellow, molybdenum orange, permanent orange GTR, pyrazolone orange, Balkan orange, indusren brilliant orange RK, benzidine orange G, and Indusren brilliant orange GK. Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, and brilliant carmine 3B.

Examples of purple pigments include manganese purple, first violet B, and methyl violet lake. Examples of blue pigments include Berlin blue, cobalt blue, alkali blue lake, Victoria blue lake, phthalocyanine blue, metal-free phthalocyanine blue, partially chlorinated phthalocyanine blue, first sky blue, and Indusren blue BC. Examples of green pigments include chrome green, chromium oxide, pigment green B, Malachite green lake, and final yellow green G. Further, examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc. These coloring agents may be used alone or in combination of two or more kinds thereof. Particularly, carbon black is preferable as the black coloring agent, and titanium oxide is preferable as the white coloring agent.

Although the manufacturing method of the particles is not specifically restricted, mixing/grinding method or polymerization method for producing toner of electrophotography is, for example, similarly employable. Further the method of coating resin or charge control agent and so on over the surface of powders such as inorganic or organic pigments is also employable.

The distance between the facing substrates is suitably adjusted in a manner where the particles can move and maintain the contrast of image display; however, it is adjusted usually within 10 to 5000 μm, preferably within 30 to 500 μm. The volume population of the particle existing in the space between the faced substrates is preferable to be 10 to 90%, more preferable to be 20 to 70%. When the volume population exceeds 80%, it causes some troubles in the particle movement, and when it is less than 10%, contrast tens to be indistinct.

In the image display panel used in the image display device according to the invention, plural of the foregoing display element are dispose in a matrix form, and images can be displayed. In the case of monochrome display, one display element makes one pixel. In the case of full color display, three kinds of display elements, i.e., one group of display elements each having color plate of R (red), G (green) and B (blue) respectively and each having particles of black composes a set of disposed elements preferably resulting in the reversible image display panel having the sets of the elements.

The image display device according to the invention is applicable to the image display unit for mobile equipments such as notebook personal computers, PDAs, cellular phones and so on; to the electric paper for electric book, electric newspaper and so on; to the bulletin boards such as signboards, posters, blackboards and so on; and to the image display unit for electric calculator, home electric application products, auto supplies and so on.

In the embodiment mentioned above, the explanations are made to the image display device wherein the partition wall is not used, but it is possible to use the partition wall. In this case, since a cell size can be made larger and an area rate of the partition wall with respect to the display area can be made smaller, it is possible to obtain a higher contrast.

Hereinafter, the image display device according to the invention will be explained in detail with reference to the actual examples, but the present invention is not limited to the following examples.

<Experiment 1 (first embodiment of the invention)>

In the image display device according to the first embodiment of the invention having the construction mentioned above, in order to examine the relation between the maximum average particle size R of the particles and the micro-concave portions and/or the micro-convex portions, the image display devices according to the examples 1 - 6 were prepared, wherein the micro-concave portions having a shape and an arrangement shown in the following Table 1 with average width W, average height (depth) H and average interval I shown in the following Table 1 were provided to one electrode, and, wherein substrate interval D and maximum average particle size R of the particles were adjusted in the manner shown in the following Table 1. With respect to the thus prepared image display devices according to the examples 1 - 6, the estimation was performed in such a manner that a rectangular waveform of 4 (kV/mm) was applied for 10 minutes by 1 (Hz) and then for 30 minutes by 10 (Hz), the image deterioration rate due to the particle agglutination was observed by naked eyes during the repeated inversion operation by 1 (Hz) after that. In Table 1, symbol "◎" showed a case wherein no image deterioration was detected, symbol "○" illustrated a case wherein image deterioration was not detected as such, symbol "Δ" depicted a case wherein image deterioration was partly detected but it is no problem on the actual use.

[Table 1]

| No. | Shape | Configuration | Average width W [μm] | Average height (depth) H [μm] | Average interval I [μm] | Substrate interval D [μm] | Maximum average particle size R [μm] | W/R | H/R | I/R | Estimation result |
|---|---|---|---|---|---|---|---|---|---|---|---|
| Example 1 | circle | lattice | 150 | 50 | 150 | 200 | 20 | 7.5 | 2.50 | 8 | ◎ |
| Example 2 | circle | lattice | 50 | 50 | 150 | 200 | 20 | 2.5 | 2.50 | 8 | ○ |
| Example 3 | circle | lattice | 40 | 50 | 150 | 200 | 20 | 2.0 | 2.50 | 8 | △ |
| Example 4 | circle | lattice | 150 | 40 | 150 | 200 | 20 | 7.5 | 2.00 | 8 | △ |
| Example 5 | circle | lattice | 150 | 50 | 500 | 200 | 20 | 7.5 | 2.50 | 25 | ◎ |
| Example 6 | circle | lattice | 150 | 50 | 1000 | 200 | 20 | 7.5 | 2.50 | 50 | ○ |

From the results shown in Table 1, the thus obtained estimation results and relations of W/R, H/R and I/R were investigated. Then, it was understood that it is preferred to set W/R to 2 or more, to set H/R to 2 or more and to set I/R to 50 or less.

In the above examples, the electrodes are arranged on the substrates. However, in order to achieve the present invention, it is not necessary to always arrange the electrodes on the substrates if the electrodes for generating the electric field are existent. Therefore, it is possible to arrange the electrodes apart from the substrates.

<Experiment 2 (second embodiment of the invention)>

In the image display device according to the second embodiment of the invention having the construction mentioned above, in order to examine the relation between the maximum average size R that is the maximum value among the average particle sizes for two or more kinds of the particles and the micro-cutout holes, the image display devices according to the examples 11 - 16 were prepared, wherein the micro-cutout holes having a shape and an arrangement shown in the following Table 2 with average width W and average interval I shown in the following Table 2 were provided to one electrode, and, wherein substrate interval d and maximum average particle size R of the particles were adjusted in the manner shown in the following Table 2. With respect to the thus prepared image display devices according to the examples 11 - 16, the estimation was performed in such a manner that a rectangular waveform of 4 (kV/mm) was applied for 10 minutes by 1 (Hz) and then for 30 minutes by 10 (Hz), the image deterioration rate due to the particle agglutination was observed by naked eyes during the repeated inversion operation by 1 (Hz) after that. In Table 2, symbol "◎" showed a case wherein no image deterioration was detected, symbol "○" illustrated a case wherein image deterioration was not detected as such, symbol "Δ" depicted a case wherein image deterioration was partly detected but it is no problem on the actual use.

[Table 2]

| No. | Shape | Configuration | Average width W [μm] | Average interval I [μm] | Substrate interval D [μm] | Maximum average particle size R [μm] | W/R | I/R | Estimation result |
|---|---|---|---|---|---|---|---|---|---|
| Example 11 | circle | lattice | 300 | 0.5 | 0.5 | 15 | 20.0 | 33 | ◎ |
| Example 12 | circle | lattice | 150 | 0.5 | 0.5 | 15 | 10.0 | 33 | ○ |
| Example 13 | circle | lattice | 50 | 0.5 | 0.5 | 15 | 3.3 | 33 | Δ |
| Example 14 | circle | lattice | 300 | 0.5 | 0.5 | 15 | 20.0 | 33 | ◎ |
| Example 15 | circle | lattice | 300 | 0.75 | 0.5 | 15 | 20.0 | 50 | ○ |
| Example 16 | circle | lattice | 300 | 1 | 0.5 | 15 | 20.0 | 67 | Δ |

From the results shown in Table 2, the relation between the average width H and the maximum average particle size R and the relation between the average interval I and the maximum average particle size R were investigated. Then, it was understood that it is preferred to set W/R to 10 or more and to set I/R to 50 or less.

In the above examples, the electrodes are arranged on the substrates. However, in order to achieve the present invention, it is not necessary to always arrange the electrodes on the substrates if the electrodes for generating the electric field are existent. Therefore, it is possible to arrange the electrodes apart from the substrates.

INDUSTRIAL APPLICABILITY

According to the first embodiment of the invention, it is possible to introduce a very little uneven electric field partly by the micro-concave portions and/or the micro-convex portions arranged to a surface of the electrode. Since the very little uneven electric field generated by the micro-concave portions and/or the micro-convex portions includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination. As a result, it is possible to improve the image quality deterioration during the durable use.

According to the second embodiment of the invention, normally, an electric field for flying the particles applied from a pair of electrodes provided respectively on the two substrates arranged in parallel with each other is an even electric field. On the other hand, in the image display device according to the invention, it is possible to introduce a very little uneven electric field partly by the micro-cutout holes arranged to a surface of the electrode. Since the very little uneven electric field generated by the micro-cutout holes includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination. As a result, it is possible to improve the image quality deterioration during the durable use.

**Claims**

1. A dry-type particle display device which comprises an image display panel, in which two or more groups of particles, each group having a different colour and a different charge characteristic, are sealed between two substrates (1, 2), at least one (1) of said two substrates being transparent, and in which the particles (5, 6), to which an electrostatic field produced by a pair of electrodes (3, 4) provided on the sides of the respective substrates facing the particles is applied, are made to move so as to display an image, characterize either in that micro-concave portions (11) and/or micro-convex portions (13) or in that micro-cutout holes (31) are provided on a part of or over the whole of an electrode surface,
   so that a lateral electric field component is induced on switching.

2. An image display device as claimed in claim 1, wherein the micro-concave portions and/or the micro-convex portions are formed in such a manner that the following formulas are satisfied:

$$w_{av} / d_{av\_max} > 2;$$

   and

$$h_{av} / d_{av\_max} > 2;$$

   wherein $w_{av}$ is the average width defined as a distance from corner to corner across the shape of the projection of the micro-concave portions and/or the micro-convex portions on to the electrode surface ,
   $h_{av}$ is the average absolute value of the depth of the micro-concave portions and/or of the height of the micro-convex portions ; and
   $d_{av\_max}$ is the largest average particle size among the two or more groups of particles.

3. An image display device as claimed in claim 2, wherein the plurality of micro-concave portions and/or the micro-convex portions is arranged on the same electrode and an average distance between $L_{av}$ between the portions is arranged to satisfy the formula:

$$L_{av} / d_{av\_max} < 50.$$

4. An image display device as claimed in any of claims 2 to 3, wherein the total area of the projection shapes of the micro-concave portions and/or the micro-convex portions on the electrode surface is 0.1 - 50 % with respect to the area of the electrode.

**5.** An image display device as claimed in claim 1, wherein the micro-cutout holes are formed in such a manner that the following formula is satisfied:

$$w_{max} / d_{av\_max} > 10;$$

where $w_{max}$ is the maximum width defined as the maximum distance from corner to corner across the shape of the micro-cutout holes; and
$d_{av\_max}$ is the largest average particle size among the two or more groups of particles.

**6.** An image display device as claimed in claim 1 or 5, wherein the plurality of micro-cutout holes is provided in the same electrode and a minimum distance $L_{min}$ between the holes is arranged to satisfy the following formula:

$$L_{min} / d_{av\_max} < 50.$$

**7.** An image display device as claimed in any of claims 1, 5 or 6, wherein the total area of the micro-cutout holes is 0.1 - 50 % with respect to the area of the electrode.

**8.** An image display device as claimed in any of claims 1 to 7, wherein an average particle diameter of the particles is 0.1 to 50 μm.

**9.** An image display device as claimed in any of claims 1 to 10, wherein the particles are such that the maximum surface potential, in the case that the surface of the particles is charged by a applying a voltage of 8 KV to a Corona discharge device deployed at a distance of 1 mm from the surface of the particles, is 300 V or greater, 0.3 second after the Corona discharge.

**10.** An image display device as claimed in any of claims 1 to 9, wherein a colour of the particles is white or black.

**Patentansprüche**

**1.** Anzeigevorrichtung auf Basis trockener Partikel, die ein Bildanzeigefeld umfasst, wobei zwei oder mehrere Gruppen aus Partikeln zwischen zwei Substraten (1, 2) versiegelt sind, wobei jede Gruppe eine unterschiedliche Farbe und eine unterschiedliche Ladekennlinie aufweist, wobei zumindest eines (1) der beiden Substrate transparent ist, und wobei die Partikel (5, 6), auf die ein elektrostatisches Feld angelegt wird, das von einem Paar Elektroden (3, 4) produziert wird, die auf den den Partikeln zugewandten Seiten der jeweiligen Substrate angeordnet sind, vorgesehen sind, um sich zu bewegen, um ein Bild anzuzeigen,
entweder **dadurch gekennzeichnet, dass** mikrokonkave Abschnitte (11) und/oder mikrokonvexe Abschnitte (13) oder **dadurch**, dass mikroausgeschnittene Löcher (31) auf einem Teil einer oder über eine gesamte Elektrodenoberfläche vorgesehen sind, so dass eine laterale elektrische Feldkomponente beim Schalten induziert wird.

**2.** Bildanzeigevorrichtung nach Anspruch 1, wobei die mikrokonkaven Abschnitte und/oder die mikrokonvexen Abschnitte derart gebildet sind, dass die folgenden Formeln zutreffen:

$$w_{av} / d_{av\_max} > 2;$$

und

$$h_{av} / d_{av\_max} > 2;$$

wobei $w_{av}$ die durchschnittliche Breite ist, die als eine Distanz von Ecke zu Ecke über die Gestalt der Projektion der mikrokonkaven Abschnitte und/oder der mikrokonvexen Abschnitte auf die Elektrodenoberfläche definiert ist, wobei $h_{av}$ der durchschnittliche absolute Wert der Tiefe der mikrokonkaven Abschnitte und/oder der Höhe der mikrokonvexen Abschnitte ist; und
wobei $d_{av\_max}$ die größte durchschnittliche Partikelgröße unter den beiden oder mehreren Partikelgruppen ist.

3. Bildanzeigevorrichtung nach Anspruch 2, wobei die Mehrzahl von mikrokonkaven Abschnitten und/oder der mikrokonvexen Abschnitte auf der gleichen Elektrode angeordnet ist, und eine durchschnittliche Distanz zwischen $L_{av}$ zwischen den Abschnitten derart ist, dass die folgende Formel zutrifft:

$$L_{av} / d_{av\_max} < 50.$$

4. Bildanzeigevorrichtung nach einem der Ansprüche 2 bis 3, wobei die Gesamtfläche der Projektionsgestalten der mikrokonkaven Abschnitte und/oder der mikrokonvexen Abschnitte auf der Elektrodenoberfläche in Bezug auf die Fläche der Elektrode 0,1 bis 50 % beträgt.

5. Bildanzeigevorrichtung nach Anspruch 1, wobei die mikroausgeschnittenen Löcher derart gebildet sind, dass die folgende Formel zutrifft:

$$w_{max} / d_{av\_max} > 10 ;$$

wobei $w_{max}$ die maximale Breite ist, die als die maximale Distanz von Ecke zu Ecke über die Gestalt der mikroausgeschnittenen Löcher definiert ist; und
$d_{av\_max}$ die größte durchschnittliche Partikelgröße unter den beiden oder mehreren Partikelgruppen ist.

6. Bildanzeigevorrichtung nach Anspruch 1 oder 5, wobei die Mehrzahl von mikroausgeschnittenen Löchern in der gleichen Elektrode vorgesehen ist und eine Mindestdistanz $L_{min}$ zwischen den Löchern derart ist, dass die folgende Formel zutrifft:

$$L_{min} / d_{av\_max} < 50.$$

7. Bildanzeigevorrichtung nach einem der Ansprüche 1, 5 oder 6, wobei die Gesamtfläche der mikroausgeschnittenen Löcher in Bezug auf die Fläche der Elektrode 0,1 bis 50 % beträgt.

8. Bildanzeigevorrichtung nach einem der Ansprüche 1 bis 7, wobei ein durchschnittlicher Partikeldurchmesser der Partikel 0,1 bis 50 $\mu$m beträgt.

9. Bildanzeigevorrichtung nach einem der Ansprüche 1 bis 10, wobei die Partikel derart sind, dass das maximale Oberflächenpotenzial, wenn die Oberfläche der Partikel durch Anlegen einer Spannung von 8 kV an eine Corona-Entladungsvorrichtung geladen wird, die in einer Distanz von 1 mm zu der Oberfläche der Partikel vorgesehen ist, 0,3 Sekunden nach der Corona-Entladung 300 V oder mehr beträgt.

10. Bildanzeigevorrichtung nach einem der Ansprüche 1 bis 9, wobei eine Farbe der Partikel weiß oder schwarz ist.

**Revendications**

1. Dispositif d'affichage de type à particules sèches qui comprend un écran d'affichage d'image, dans lequel deux groupes, ou plus, de particules, chaque groupe ayant une couleur différente et une caractéristique de charge différente, sont scellés entre deux substrats (1, 2), au moins un (1) desdits deux substrats étant transparent, et dans lequel les particules (5, 6), auxquelles un champ électrostatique produit par une paire d'électrodes (3, 4) disposées sur les faces des substrats respectifs en face des particules est appliqué, sont mises en mouvement de manière à afficher une image,

**caractérisé** soit en ce que des parties micro-concaves (11) et/ou des parties micro-convexes (13), soit en ce que des trous micro-découpés (31) sont pourvus sur une partie de, ou sur l'ensemble de la surface de l'électrode, de manière à ce qu'une composante de champ électrique latérale soit induite à la commutation.

2. Dispositif d'affichage d'image tel que revendiqué dans la revendication 1, dans lequel les portions micro-concaves et/ou les portions micro-convexes sont formées de telle manière que les formules suivantes soient satisfaites :

$$w_{av} / d_{av\_max} > 2 \; ;$$

et

$$h_{av} / d_{av\_max} > 2 \; ;$$

où $w_{av}$ est la largeur moyenne définie comme distance de coin à coin à travers la forme de la projection des portions micro-concaves et/ou des portions micro-convexes sur la surface de l'électrode,
$h_{av}$ est la valeur absolue moyenne de la profondeur des portions micro-concaves et/ou de la hauteur des portions micro-convexes ; et
$d_{av\_max}$ est la taille de particule moyenne la plus grande parmi les deux, ou plus, groupes de particules.

3. Dispositif d'affichage d'image tel que revendiqué dans la revendication 2, dans lequel la pluralité de portions micro-concaves et/ou de portions micro-convexes est arrangée sur la même électrode et une distance moyenne $L_{av}$ entre les portions est arrangée pour satisfaire la formule :

$$L_{av} / d_{av\_max} < 50.$$

4. Dispositif d'affichage d'image tel que revendiqué dans l'une quelconque des revendications 2 à 3, dans lequel la surface totale des formes de projection des portions micro-concaves et/ou des portions micro-convexes sur la surface de l'électrode est de 0,1 à 50 % par rapport à la surface de l'électrode.

5. Dispositif d'affichage d'image tel que revendiqué dans la revendication 1, dans lequel les trous micro-découpés sont formés de telle manière que la formule suivante soit satisfaite :

$$w_{max} / d_{av\_max} > 10 \; ;$$

où $w_{max}$ est la largeur maximum définie comme distance maximum de coin à coin à travers la forme des trous micro-découpés ; et
$d_{av\_max}$ est la taille de particule moyenne la plus grande parmi les deux, ou plus, groupes de particules.

6. Dispositif d'affichage d'image tel que revendiqué dans la revendication 1 ou la revendication 5, dans lequel la pluralité de trous micro-découpés est pourvue sur la même électrode et où une distance minimum $L_{min}$ entre les trous est arrangée pour satisfaire la formule suivante :

$$L_{min} / d_{av\_max} < 50.$$

7. Dispositif d'affichage d'image tel que revendiqué dans l'une quelconque des revendications 1, 5 ou 6, dans lequel la surface totale des trous micro-découpés est de 0,1 à 50 % par rapport à la surface de l'électrode.

8. Dispositif d'affichage d'image tel que revendiqué dans l'une quelconque des revendications 1 à 7, dans lequel un diamètre de particule moyen des particules va de 0,1 à 50 $\mu$m.

9. Dispositif d'affichage d'image tel que revendiqué dans l'une quelconque des revendications 1 à 10, dans lequel les particules sont telles que le potentiel de surface maximum, dans le cas où la surface des particules est chargée en appliquant une tension de 8 KV à un dispositif à décharge Corona déployé à une distance de 1 mm de la surface des particules, est de 300 V ou plus, 0,3 seconde après la décharge Corona.

10. Dispositif d'affichage d'image tel que revendiqué dans l'une quelconque des revendications 1 à 9, dans lequel une couleur des particules est blanc ou noir.

# FIG. 1

(a)

(b)

(c)

# FIG. 2

(a)

12
11

(b)

12
11

(c)

12
11

(d)

12
11

(e)

12
13

(f)

12
11

(g)

12
13

(h)

12
11

# FIG. 3

# F/G. 4

## FIG. 5

# FIG. 6

# FIG. 7

(a) 32

(b) 31

31

32

(c) 32

(d) 31

31

32

(e) 31

(f) 31

32

32

(g)

31

32

## FIG. 8

# FIG. 9

## FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1089118 A
- JP 21196254 A
- US 2002027635 A

### Non-patent literature cited in the description

- Japan Hardcopy '99. The Imaging Society of Japan, 21 July 1999, 249-252